# FASCICULE DE BREVET EUROPEEN

(11) **EP 2 508 849 B1**
(45) Date de publication et mention de la délivrance du brevet: **27.05.2020**
(21) Numéro de dépôt: 12163077.6
(22) Date de dépôt: 04.04.2012
(51) Int. Cl.: G01D 11/24, G01D 11/30, G01K 1/14

(54) **Dispositif de fixation d'un capteur de mesure d'une grandeur physique du contenu d'un milieu confine**
Befestigungsvorrichtung eines Messsensors einer physischen Größe des Inhalts eines abgegrenzten Bereichs
Device for attaching a sensor for measuring a physical magnitude of the contents of a confined environment

(30) Priorité: 04.04.2011 FR 1152884
(43) Date de publication de la demande: 10.10.2012
(73) Titulaire: GRTGAZ, 92270 Bois Colombes (FR)
(72) Inventeur: BROCHOT, Francis, 77120 AULNOY (FR); RIEGERT, Frédéric, 92700 Colombes (FR)
(74) Mandataire: Cassiopi

(56) Documents cités:
- CH-A- 521 657
- US-A- 3 462 315
- US-A- 5 456 761

## Description

### DOMAINE TECHNIQUE DE L'INVENTION

L'invention concerne un dispositif de fixation d'un capteur de mesure d'une grandeur physique du contenu d'un milieu confiné. L'invention présente une application particulièrement avantageuse pour monter et démonter un capteur de mesure associé à un doigt de gant.

### ETAT DE LA TECHNIQUE

Un doigt de gant (en anglais « thimble ») est un tube de petit diamètre fermé à une extrémité et permettant d'effectuer des échanges entre des milieux physiques séparés par sa paroi. Les doigts de gant sont communément utilisés afin de mesurer certaines propriétés d'un contenu dans un milieu confiné sans que la sonde d'un capteur de mesure soit en contact direct avec le fluide présent à l'intérieur du milieu confiné, le milieu confiné pouvant être, par exemple, un réservoir, un tuyau ou une canalisation.

Par exemple, dans une canalisation, un système de fixation comprenant un doigt de gant peut être mis en place pour permettre à une sonde de mesurer la température d'un fluide circulant dans la canalisation et corriger au besoin le débit du fluide. Pour ce faire la sonde peut être du type thermocouple.

Les doigts de gant sont généralement fixés mécaniquement sur la paroi du milieu confiné par un moyen approprié soudé sur la paroi du milieu confiné. Généralement la fixation est du type vis et écrou, le doigt de gant possède alors un filetage externe autorisant le vissage du doigt de gant dans le filetage interne d'un moyen approprié de type écrou, par exemple un thrédolet. Une partie du doigt de gant, externe au milieu confiné, est apte à être entourée par un outil de serrage permettant à l'exploitant de serrer ou desserrer la fixation du doigt de gant dans le moyen approprié. Généralement, cette partie du doigt de gant possède un périmètre hexagonal et une taille normalisée.

Régulièrement, il est constaté des incidents ou accidents lors de démontage de sonde disposée dans un doigt de gant. En effet, afin de démonter en toute sécurité un capteur de mesure fixé sur un doigt de gant, il faut utiliser une clé pour dévisser le capteur de mesure et une contre-clé pour maintenir en place le doigt de gant dans le moyen approprié. Toutefois, il arrive que la contre-clé soit oubliée et que le doigt de gant se dévisse à la place du capteur de mesure. Il arrive aussi que l'exploitant se trompe et dévisse directement le doigt de gant au lieu du capteur de mesure. Si une erreur intervient dans le démontage du capteur de mesure, cela peut engendrer un risque mécanique, thermique ou chimique selon les propriétés du liquide ou du gaz contenu dans le milieu confiné.

En outre, une autre difficulté liée aux sondes visées dans les doigts de gant est rencontrée lors du démontage des sondes avec câblage : le câblage de la sonde doit être déconnecté avant le dévissage afin d'éviter de tordre le câble. Cette déconnection électrique supplémentaire ajoute des contraintes de type consignation électrique, habilitation électrique de l'exploitant, outillage, temps d'exécution ...

On connaît le document US 5 456 761 et le document US 3 462 315, qui décrivent des dispositifs de fixation de capteurs.

### OBJET DE L'INVENTION

L'invention propose de remplacer la fixation de type vis et écrou permettant d'associer classiquement le capteur de mesure au doigt de gant par une fixation attachable et détachable manuellement.

A cet effet, l'invention vise un ensemble selon la revendication 1.

On comprend par fixation attachable et détachable manuellement tous les systèmes mécaniques permettant à un exploitant de force moyenne d'attacher le capteur de mesure au doigt de gant ou de détacher le capteur de mesure du doigt de gant sans utiliser un outil. Les systèmes mécaniques peuvent être du type clipsage, crochet, emmanchement en force... L'invention répond alors au problème des risques encourus par l'exploitant lors du montage et du démontage du capteur de mesure.

On note que le capteur de mesure comprend la sonde, un élément d'assemblage au dispositif et, éventuellement, des éléments de traitement, de transmission et/ou d'affichage de valeurs mesurées. Le doigt de gant peut être fixé sur une paroi du milieu confiné par un moyen approprié, par exemple de type écrou.

Dans des modes de réalisation, la fixation attachable et détachable manuellement comporte un premier élément relié au doigt de gant et un deuxième élément relié au capteur de mesure. Cette réalisation présente l'avantage de résoudre les contraintes de déconnection électrique de la sonde puisque cette déconnexion peut être effectuée dans une manipulation sans action de vissage donc sans torsion du câblage.

Par exemple, le dispositif de fixation par serrage de stries annulaires nécessite la disposition d'un élément mâle et d'un élément femelle. Ce dispositif de fixation par serrage de stries annulaires peut être mis en place pour garantir une bonne résistance à la pression. Il existe d'autres systèmes par clipsage moins coûteux tels que les raccords à billes, ressort, bague, raccord lisse avec joint torique...

Dans des modes de réalisation, les éléments de la fixation attachable et détachable manuellement sont aptes à être associés et dissociés avec un mouvement manuel comportant une rotation inférieure à un demi-tour, ce qui permet à l'utilisateur de ne pas lâcher l'un des éléments de fixation pendant la solidarisation ou la désolidarisation des éléments de de la fixation. Ce mode de réalisation préférentiel de la fixation, attachable et détachable manuellement, exclu les associations par vissage qui présentent les mêmes risques que l'art antérieur : c'est-à-dire un dévissage du mauvais élément et une torsion possible d'un câblage et d'un connecteur électriques.

Dans des modes de réalisation, le doigt de gant et le premier élément de la fixation sont réalisés en une seule pièce monobloc. Cette réalisation présente l'avantage de réduire le nombre de pièces vissées du dispositif de fixation et ainsi de réduire le risque de mauvais dévissage. De plus, cette réalisation améliore la rigidité du dispositif de fixation. Cette solution est envisagée pour mettre en place le dispositif de l'invention dans un milieu confiné ou pour remplacer un dispositif de fixation existant.

Dans des modes de réalisation, le dispositif de fixation objet de l'invention comporte un raccord d'assemblage intermédiaire entre le doigt de gant et le premier élément de la fixation. Cette réalisation permet de réaliser les deux pièces séparément. Cette solution est envisagée pour remplacer en partie un dispositif de fixation existant et mettre en place le dispositif objet de l'invention.

Dans des modes de réalisation, le raccord d'assemblage intermédiaire entre le doigt de gant et le premier élément de la fixation comporte un filetage. Le raccord d'assemblage comporte ainsi une extrémité est de type vis ou, en variante, écrou. Ces modes de réalisation présentent l'avantage de ne pas modifier les doigts de gant existants, munis d'un filetage, pour la mise en œuvre du dispositif objet de l'invention.

Dans des modes de réalisation, un élément de protection est déployé sur une partie du doigt de gant apte à être entourée par un outil de serrage. La partie du doigt de gant apte à être entourée par un outil de serrage présente, par exemple, un périmètre hexagonal permettant à l'exploitant de monter ou démonter le doigt de gant dans un moyen approprié, de type écrou, au moyen d'un outil de serrage, par exemple une clé. L'élément de protection, par exemple de type « jupe » en matière plastique, permet de protéger la partie du doigt de gant apte à recevoir l'outil de serrage mais également la partie du doigt de gant en contact avec le moyen approprié.

Dans des modes de réalisation, le dispositif de fixation objet de l'invention comporte un moyen apte à garantir la non étanchéité de la fixation attachable et détachable manuellement. En cas de fissuration du doigt de gant, il peut y avoir présence coté sonde d'un fluide sous pression. Cette réalisation présente l'avantage d'éviter, dans ce cas, les risques de projection lors du démontage de la fixation attachable et détachable manuellement.

Dans des modes de réalisation, le moyen apte à garantir la non étanchéité de la fixation attachable et détachable manuellement comporte des trous permanents.

Dans des modes de réalisation, le moyen apte à garantir la non étanchéité de la fixation attachable et détachable manuellement comporte au moins une soupape ou un disque de rupture. Grâce à chacune de ces dispositions, le fluide anormalement présent dans le doigt de gant est ainsi purgé par la fixation sans être projeté sur l'utilisateur.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique des éléments d'un mode de réalisation particulier du dispositif objet de l'invention permettant de remplacer un système de fixation existant ;
Figure 2 : une représentation schématique des éléments d'un mode de réalisation particulier du dispositif objet de l'invention permettant de remplacer en partie un système de fixation existant et
Figure 3 : une représentation schématique des éléments d'un mode de réalisation particulier du dispositif objet de l'invention dans une réalisation de l'invention.

Les éléments identiques, similaires ou analogues, conservent les mêmes références d'une Figure à l'autre.

### DESCRIPTION D'EXEMPLES DE REALISATION DE L'INVENTION

Les figures ne sont pas à l'échelle.

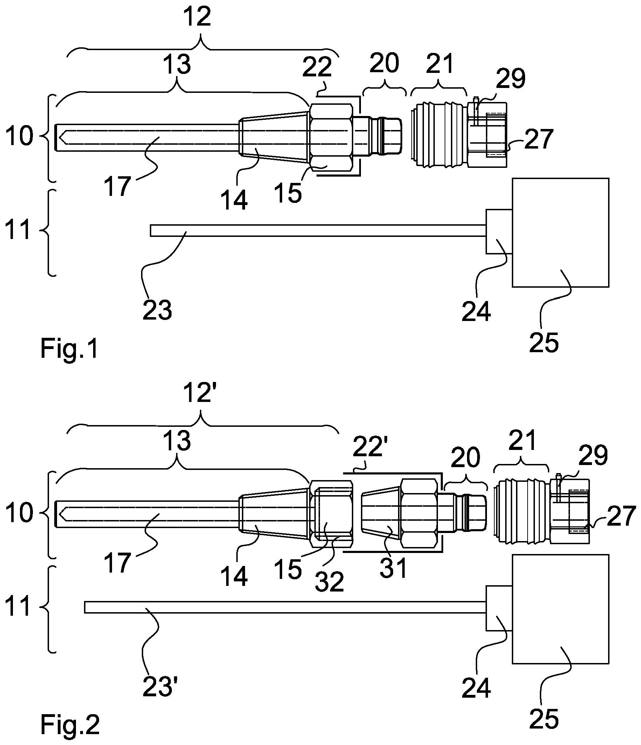

La Figure 1 montre une représentation schématique des éléments d'un mode de réalisation particulier du dispositif objet de l'invention permettant de remplacer un système de fixation existant. La Figure 1 montre ainsi le dispositif 10 de fixation objet de l'invention et le capteur 11 de mesure d'une grandeur physique du contenu d'un milieu confiné. Le milieu confiné peut être un réservoir, un tuyau, une canalisation.

Le dispositif 10 de fixation comporte un doigt de gant 12 composé d'une partie pénétrante 13 dans le milieu confiné et d'une partie 15 apte à être entourée par un outil de serrage. La partie 15 du doigt de gant 12 apte à être entourée par un outil de serrage possède, par exemple, un périmètre hexagonal permettant à l'exploitant de monter ou démonter le doigt de gant 12 dans le moyen approprié, au moyen d'une clé. La liaison mécanique entre le doigt de gant 12 et le moyen approprié est du type vis et écrou, la partie pénétrante 13 comportant un filetage 14 biseauté correspondant au moyen approprié.

Le doigt de gant 12 possède un corps caverneux 17 permettant d'accueillir une sonde 23 du capteur de mesure 11 apte à mesurer certaines grandeurs physiques d'un contenu dans le milieu confiné sans que la sonde 23 soit en contact direct avec le fluide présent à l'intérieur du milieu confiné.

Un élément 22 de protection, par exemple de type « jupe » en matière plastique, permet de protéger la partie du doigt de gant 12 apte à être entourée par un outil de serrage mais également la partie du doigt de gant 12 en contact avec le moyen approprié.

Le capteur 11 de mesure comprend la sonde 23, les éléments d'assemblage 24 avec le dispositif 10 de fixation et les éléments 25 de traitement et/ou d'affichage. Les éléments d'assemblage 24 sont reliés avec le dispositif 10 de fixation par les moyens 27 d'installation du capteur 11 de mesure. Par exemple, les éléments d'assemblage 24 et les moyens 27 peuvent présenter un filetage commun permettant de visser le moyen 11 dans le dispositif 10 de fixation.

Le dispositif objet de l'invention propose de relier le capteur 11 de mesure au doigt de gant 12 par une fixation attachable et détachable manuellement. Plus précisément, la fixation attachable et détachable manuellement permet de relier directement le capteur 11 de mesure au doigt de gant 12. On comprend par fixation attachable et détachable manuellement tout les systèmes mécaniques permettant à un exploitant de force moyenne d'attacher ou de détacher le capteur 11 de mesure avec le doigt de gant 12 sans utiliser un outil. Les systèmes mécaniques peuvent être du type clipsage, crochet, emmanchement en force ... Il est ainsi possible d'installer un capteur 11 de mesure, ou de remplacer uniquement le capteur 11 de mesure par un nouveau capteur 11 de mesure, sans difficulté pour un exploitant.

Par exemple, la Figure 1 montre une fixation par serrage de stries annulaires. Un élément 20 mâle, faisant partie du doigt de gant 12, peut pénétrer dans un élément 21 femelle. Les stries annulaires du dispositif de fixation 10 assurent alors le maintien des éléments 20 mâle et 21 femelle ensemble, réalisées en acier inoxydable, grâce à un joint torique en élastomère nitrile. De plus, le joint torique assure l'étanchéité de la liaison entre les éléments 20 maie et 21 femelle. Cette fixation par serrage de stries annulaires permet une bonne résistance à la pression et une simplicité de manipulation par l'exploitant.

En cas de fissuration du doigt de gant 12, il peut y avoir présence coté sonde 23 d'un fluide sous pression. Pour palier à ce problème, le dispositif 10 de fixation objet de l'invention comporte, dans des variantes, un moyen 29 apte à garantir la non étanchéité de la fixation attachable et détachable manuellement.

Ce moyen 29 peut être composé de trous permanents permettant au fluide anormalement présent dans le doigt de gant 12 d'être évacué sans être projeté vers l'utilisateur. Ce moyen 29 peut également être composé d'au moins une soupape ou d'un disque de rupture permettant au fluide anormalement présent dans le doigt de gant 12 d'être purgé du dispositif 10 de fixation.

Sur la Figure 1, le doigt de gant 12 et le premier élément 20 de la fixation sont réalisés en une seule pièce monobloc. Cette réalisation présente un avantage de rigidité du dispositif 10 de fixation. Cette solution est envisagée pour mettre en place le dispositif objet de l'invention dans un milieu confiné ou pour remplacer un dispositif 10 de fixation existant.

Sur la Figure 2, le dispositif 10 de fixation objet de l'invention comporte un raccord 31 d'assemblage intermédiaire entre un doigt de gant 12' et le premier élément 20 de la fixation. Cette réalisation permet de réaliser les deux pièces séparément. Cette solution est envisagée pour remplacer en partie un dispositif 10 de fixation existant et mettre en place un dispositif selon l'invention.

Dans les deux modes de réalisation, les éléments 20 et 21 de la fixation attachable et détachable manuellement sont aptes à être associés et dissociés avec un mouvement manuel comportant une rotation inférieure à un demi-tour, ce qui permet à l'utilisateur de ne pas lâcher l'un des éléments de fixation pendant la solidarisation ou la désolidarisation des éléments de de la fixation. Un seul mouvement suffit ainsi à la fixation et au détachement des éléments de fixation.

Sur la Figure 2, le raccord 31 d'assemblage intermédiaire entre le doigt de gant et le premier élément 20 de la fixation est de type vis ou, en variante, écrou. Le raccord 31 d'assemblage présente alors un filetage externe correspondant au filetage interne 32 du doigt de gant 12'. Ce mode de réalisation présente l'avantage de ne pas avoir à modifier les doigts de gant 12' existant, dotés d'un filetage, pour la mise en œuvre d'un dispositif selon l'invention. Cependant, cette solution est moins préférentielle car la sonde 23' doit être plus longue qu'une sonde 23 classique pour être adaptée à pénétrer jusqu'au fond du corps caverneux 17. L'élément 22' de protection doit également être adapté pour cette solution.

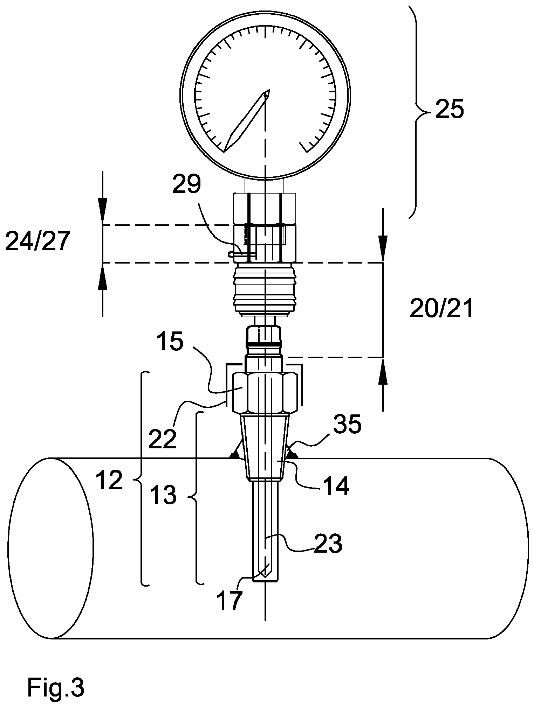

La Figure 3 montre un exemple de réalisation du dispositif objet de l'invention disposé sur un tuyau. Les éléments sont ainsi assemblés pour assurer la rigidité du dispositif 10 de fixation. Une partie 13 du doigt de gant est disposée à l'intérieur du tuyau. Le doigt de gant est ainsi vissé par le filetage 24 dans un moyen approprié soudé au tuyau par une soudure 35, la partie 15 permettant à l'exploitant d'effectuer le serrage du doigt de gant. Un élément 22 de protection est également disposé pour protéger cette partie 15.

Les éléments 20 et 21 de la fixation attachable et détachable manuellement sont connectés entre eux. La fixation entre le doigt de gant et le moyen approprié 35 étant du type vis et écrou, le doigt de gant 12 possède alors un filetage 14 autorisant le vissage du doigt de gant 12 dans le moyen approprié 35 de type écrou, par exemple un thrédolet.

La partie 15 du doigt de gant 12, externe au milieu confiné, est apte à être entourée par un outil de serrage permettant à l'exploitant de serrer ou desserrer le doigt de gant 12 dans le moyen approprié 35, de type écrou. Cette partie 15 du doigt de gant 12 est hexagonale avec une taille normalisée.

Les éléments sont ainsi assemblés pour assurer la rigidité du dispositif 10 de fixation. Une partie 13 du doigt de gant 12 est disposée à l'intérieur du tuyau. Le doigt de gant 12 est ainsi vissé par le filetage 24 dans un moyen approprié de type écrou soudé au tuyau, la partie 15 permettant à l'exploitant d'effectuer le serrage du doigt de gant 12. Un élément 22 de protection est également disposé pour protéger cette partie 15.

Les éléments 20 et 21 de la fixation attachable et détachable manuellement sont connectés entre eux. Le moyen 11 de mesure est inséré dans le corps caverneux 17 et vissé entre les filetages des éléments d'assemblage 24 et des moyens 27. On retrouve également la présence du moyen 29 apte à garantir la non étanchéité de la fixation attachable et détachable manuellement.

En outre, les éléments 25 de traitement et/ou d'affichage utilisent un simple compteur de température.

Grace à la fixation attachable et détachable manuellement, le dispositif objet de l'invention permet de remplacer un capteur 11 de mesure, facilement et sans risque pour l'exploitant ou le capteur.

## Revendications

1. Ensemble comprenant un capteur (11) de mesure d'une grandeur physique relative au contenu d'un milieu confiné, et un dispositif de fixation (10) dudit ensemble sur une paroi dudit milieu confiné, dans lequel :
- le dispositif (10) de fixation comporte un doigt de gant (12, 12') fixé sur la paroi du milieu confiné, le doigt de gant comportant une partie (13) pénétrante dans le milieu confiné ;
- le capteur (11) de mesure comporte une sonde (23, 23') disposée à l'intérieur de la partie (13) pénétrante du doigt de gant (12, 12'), de sorte à isoler la sonde du contact direct avec le contenu du milieu confiné ;
- le capteur (11) de mesure est relié au doigt de gant (12, 12') par une fixation attachable et détachable manuellement ;
**caractérisé en ce qu'**il comporte un moyen (29) de purge apte à purger un fluide présent dans le doigt de gant.

2. Ensemble selon la revendication 1, dans lequel la fixation attachable et détachable manuellement comporte un premier élément (20) relié au doigt de gant (12, 12') et un deuxième élément (21) relié au capteur (11) de mesure.

3. Ensemble selon la revendication 2, dans lequel les éléments (20, 21) de la fixation attachable et détachable manuellement sont aptes à être associés et dissociés avec un mouvement manuel comportant une rotation inférieure à un demi-tour.

4. Ensemble selon l'une des revendications 2 ou 3, dans lequel le doigt de gant (12) et le premier élément (20) de la fixation sont réalisés en une seule pièce monobloc.

5. Ensemble selon l'une des revendications 2 ou 3, dans lequel le dispositif de fixation comporte un raccord (31) d'assemblage intermédiaire entre le doigt de gant (12') et le premier élément (20) de la fixation.

6. Ensemble selon la revendication 5, dans lequel le raccord (31) d'assemblage intermédiaire entre le doigt de gant (12') et le premier élément (20) de la fixation comporte un filetage.

7. Ensemble selon l'une des revendications 1 à 6, dans lequel le dispositif de fixation comporte un élément (22, 22') de protection déployé sur une partie du doigt de gant (12, 12') apte à être entourée par un outil de serrage.

8. Ensemble selon la revendication 1, qui comporte des éléments d'assemblage (24, 27) du capteur avec le dispositif de fixation (10), dans lequel le moyen (29) de purge comporte un trou dans lesdits éléments d'assemblage.

9. Ensemble selon la revendication 8, dans lequel le moyen (29) de purge comporte au moins une soupape ou un disque de rupture.

## Patentansprüche

1. Gruppe, umfassend einen Messsensor (11) einer physikalischen Größe in Bezug auf den Inhalt eines eingeschlossenen Milieus und eine Befestigungsvorrichtung (10) der genannten Gruppe auf einer Wand des genannten Milieus, in der:
- die Befestigungsvorrichtung (10) einen Handschuhfinger (12, 12') umfasst, der auf der Wand des eingeschlossenen Mediums befestigt ist, wobei der Handschuhfinger einen Teil (13) umfasst, der in das eingeschlossene Medium eindringt;
- der Messsensor (11) eine Sonde (23, 23') umfasst, die im Innern des eindringenden Teils (13) des Handschuhfingers (12, 12') derart angeordnet ist, dass die Sonde vom direkten Kontakt mit dem Inhalt des eingeschlossenen Mediums isoliert ist;
- der Messsensor (11) mit dem Handschuhfinger (12, 12') durch eine manuell befestigbare und ablösbare Befestigung verbunden ist;
**dadurch gekennzeichnet, dass** sie ein Ablassmittel (29) umfasst, das geeignet ist, eine in dem Handschuhfinger vorhandene Flüssigkeit abzulassen.

2. Gruppe gemäß Anspruch 1, bei der die manuell befestigbare und ablösbare Befestigung ein erstes Element (20), das mit dem Handschuhfinger (12, 12') verbunden ist, und ein zweites Element (21), das mit dem Messsensor (11) verbunden ist, umfasst.

3. Gruppe gemäß Anspruch 2, bei der die manuell befestigbaren und lösbaren Befestigungselemente (20, 21) geeignet sind, mit einer manuellen Bewegung zugeordnet und gelöst zu sein, die eine Drehung von weniger als einer halben Umdrehung umfasst.

4. Gruppe gemäß einem der Ansprüche 2 oder 3, bei der der Handschuhfinger (12) und das erste Element (20) der Befestigung in einem einzigen Stück aus einem Block realisiert sind.

5. Gruppe gemäß einem der Ansprüche 2 oder 3, bei der die Befestigungsvorrichtung einen Zwischenmontage-Anschluss (31) zwischen dem Handschuhfinger (12') und dem ersten Befestigungselement (20) umfasst.

6. Gruppe gemäß Anspruch 5, bei der der Zwischenmontage-Anschluss zwischen dem Handschuhfinger (12') und dem ersten Element (20) der Befestigung ein Gewinde umfasst.

7. Gruppe gemäß einem der Ansprüche 1 bis 6, bei der die Befestigungsvorrichtung ein Schutzelement (22, 22') umfasst, das auf einem Teil des Handschuhfingers (12, 12') ausgebreitet ist, der geeignet ist, von einem Einspannwerkzeug umgeben zu sein.

8. Gruppe gemäß Anspruch 1, die Montageelemente (24, 27) des Sensors mit der Befestigungsvorrichtung (10) umfasst, in der das Ablassmittel (29) ein Loch in den genannten Montagemitteln umfasst.

9. Gruppe gemäß Anspruch 8, bei der das Ablassmittel (29) wenigstens ein Ventil oder eine Berstscheibe umfasst.

## Claims

1. Assembly comprising a sensor (11) for measuring a physical quantity relating to the content of a confined environment, and a device (10) for fastening said assembly on a wall of said confined environment, wherein:
- the fastening device (10) comprises a thimble (12, 12') fastened on the wall of the confined environment, the thimble comprising a portion (13) penetrating into the confined environment;
- the measurement sensor (11) comprises a probe (23, 23') positioned inside the penetrating portion (13) of the thimble (12, 12'), such that the probe is isolated from direct contact with the contents of the confined environment;
- the measurement sensor (11) is connected to the thimble (12, 12') by a fastening that can be attached and detached manually;
which assembly is **characterized in that** it comprises a draining means (29) that can drain a fluid present in the thimble.

2. Assembly according to claim 1, wherein the manually attachable and detachable fastening comprises a first element (20) connected to the thimble (12, 12') and a second element (21) connected to the measurement sensor (11).

3. Assembly according to claim 2, wherein the elements (20, 21) of the manually attachable and detachable fastening are able to be coupled and uncoupled with a manual movement comprising a rotation of less than a half-turn.

4. Assembly according to one of claims 2 or 3, wherein the thimble (12) and the first element (20) of the fastening are produced as a single monobloc part.

5. Assembly according to one of claims 2 or 3, wherein the fastening device comprises an intermediate connection fitting (31) between the thimble (12') and the first element (20) of the fastening.

6. Assembly according to claim 5, wherein the intermediate connection fitting (31) between the thimble (12') and the first element (20) of the fastening comprises threading.

7. Assembly according to one of claims 1 to 6, wherein the fastening device comprises a protective element (22, 22') installed on a portion of the thimble (12, 12') that can be surrounded by a tightening tool.

8. Assembly according to claim 1, which comprises connection elements (24, 27) for connecting the sensor with the fastening device (10), wherein the draining means (29) comprises a hole in said connection elements.

9. Assembly according to claim 8, wherein the draining means (29) comprises at least one valve or one rupture disk.
